# EUROPÄISCHE PATENTSCHRIFT

(11) **EP 2 841 555 B1**
(45) Veröffentlichungstag und Bekanntmachung des Hinweises auf die Patenterteilung: **12.04.2017**
(21) Anmeldenummer: 13722988.6
(22) Anmeldetag: 23.04.2013
(51) Int. Cl.: C12C 7/24, C12C 7/26

(54) **WÜRZEAUSDAMPFVORRICHTUNG**
WORT EVAPORATION DEVICE
DISPOSITIF D'ÉVAPORATION DU MOÛT

(30) Priorität: 24.04.2012 DE 102012008011
(43) Veröffentlichungstag der Anmeldung: 04.03.2015
(73) Patentinhaber: ZIEMANN HOLVRIEKA GmbH, 71636 Ludwigsburg (DE)
(72) Erfinder: BECHER, Tobias, 71701 Schwieberdingen (DE); GEHRIG, Klaus, 71640 Ludwigsburg (DE); WASMUHT, Klaus Karl, 91792 Ellingen (DE)
(74) Vertreter: Kuhnen & Wacker
(86) Internationale Anmeldenummer: PCT/EP2013/001225
(87) Internationale Veröffentlichungsnummer: WO 2013/159918

(56) Entgegenhaltungen:
- DE-A1- 2 515 451
- DE-A1- 3 344 716
- DE-U1-202007 001 119
- IL-A- 103 145
- MARX G; SCOPEL S; WACKERBAUER K: "Kochtrubabscheidung, Entfernung und Rückgewinnung der Würze", BRAUWELT, Nr. 33, 1985, Seiten 1697-1702, XP009172070, Berlin, DE ISSN: 0724-696X

## Beschreibung

Beim Bierbrauen wird nach dem Kochen der Würze in einem Trubabscheider der Heißtrub aus der Würze abgeschieden. Während dieses Vorganges finden in der Würze Stoffumwandlungen statt. Die Umwandlungsprodukte sind zum Teil unerwünscht. Sie müssen aus der Würze ausgeschieden werden. Flüchtige Umwandlungsprodukte werden in einer Ausdampfvorrichtung mit dem aus der Würze austretenden Dampf ausgetrieben.

Eine solche Ausdampfvorrichtung ist in der Zeitschrift "Brauindustrie" in Heft 4/2012 auf den Seiten 22 bis 24, insbesondere auf Seite 24, rechte Spalte, Zeile 4 - 12, beschrieben. Diese Ausdampfvorrichtung weist ein Gefäß auf, das durch mehrere Wandteile gebildet wird.

Der eine Wandteil bildet eine zylindrische Umfangswand. Im Bereich dieses Wandteils ist ein Verteilerring mit acht Düsen angeordnet, mittels derer die Würze auf die zylindrische Innenwand des Gefäßes aufgesprüht wird, an der entlang sie nach unten fließt.

In dem anderen Wandteil, der den ebenen Boden des Gefäßes bildet, ist eine Auslauföffnung für die Würze vorhanden, an die eine Auslaufleitung angeschlossen ist.

Der weitere Wandteil, der als Deckel des Gefäßes dient, ist kegelstupfförmig ausgebildet und weist an seinem oberen Ende eine Auslassöffnung für den aus der Würze abgeschiedenen Dampf auf, an die eine Auslassleitung für den Dampf angeschlossen ist.

Bei dieser Ausdampfvorrichtung wirkt die Erdbeschleunigung bereits auf die aus den Düsen austretenden Würzestrahlen ein, was sich bei dem auf die Innenseite der lotrechten Zylinderwand aufgebrachten Würzefilm fortsetzt. Der Würzefilm fließt beschleunigt nach unten zur Auslauföffnung hin ab. Daraus ergibt sich eine verhältnismäßig kurze Verweildauer der Würze an der Zylinderwand. Das vermindert die Ausdampfrate. Außerdem kann durch das Aufsprühen der Würze auf die Zylinderwand ein Teil der Würze ein Aerosol bilden, das zusammen mit den Dampfschwaden aus der Vorrichtung ausgetragen wird.

In der Zeitschrift Brauwelt, Nr. 33, 1985, wird auf den Seiten 1697 - 1702 ein zylindrokonischer Whirlpool mit einer Gasaustrittsöffnung, einem Würzeauslass sowie einer tangentialen Würze-Einlassöffnung im kegelstumpfförmigen Teil der Vorrichtung beschrieben.

Der Erfindung liegt die Aufgabe zugrunde, eine Würzeausdampfvorrichtung zu schaffen, die eine längere Verweildauer der Würze auf dem betreffenden Wandteil und dadurch eine höhere Ausdampfrate als bei der bekannten Vorrichtung ermöglicht. Diese Aufgabe wird durch eine Würzeausdampfvorrichtung mit den im Anspruch 1 angegebenen Merkmalen gelöst.

Dadurch, dass der Wandteil mit der Auslauföffnung für die Würze als hohler Kegelstumpf ausgebildet ist, der sich nach oben öffnet, und dadurch, dass die Austrittsöffnung für die Würze im oberen Bereich des kegelstumpfförmigen Wandteils angeordnet ist und in Umfangsrichtung des kegelstumpfförmigen Wandteils zumindest annähernd tangential zur Innenseite des kegelstumpfförmigen Wandteils ausgerichtet ist, wird in diesem oberen Bereich die Würze in einem Flüssigkeitsfilm auf die Innenseite des kegelstumpfförmigen Wandteils aufgebracht, von wo sie auf einer näherungsweise spiralförmigen Flüssigkeitsbahn allmählich zur Auslauföffnung hin abfließt, so dass der Würzefilm ausreichend Zeit hat, Dampf austreten zu lassen und damit auch flüchtige Inhaltsstoffe zusammen mit dem Dampf austreten zu lassen, der dann über die Auslassöffnung aus dem Gefäß abgeführt wird.

Durch eine Ausgestaltung der Vorrichtung nach Anspruch 2 wird der näherungsweise spiralförmige Verlauf der Würzebahn unterstützt und die Verweildauer der Würze auf der Innenseite des Wandteils verlängert. Durch eine Weiterbildung der Vorrichtung nach Anspruch 3 wird diese Wirkung verstärkt.

Durch eine Ausgestaltung der Vorrichtung nach Anspruch 4 wird erreicht, dass die Innenseite des kegelstumpfförmigen Wandteils möglichst gleichmäßig und vollständig von dem Würzefilm bedeckt wird. Das gilt insbesondere für eine Weiterbildung der Vorrichtung nach Anspruch 5.

Durch eine Ausgestaltung der Vorrichtung nach Anspruch 6 wird erreicht, dass der Würzefilm nicht durch Einbauten auf der Innenseite des kegelstumpfförmigen Wandteils, also auch nicht durch die Austrittsöffnung selbst, gestört wird.

Durch die Ausgestaltung der Vorrichtung nach Anspruch 7 wird zwischen der Zuführleitung und der Austrittsöffnung für die Würze eine Beruhigungstrecke geschaffen, die das gleichmäßige Aufbringen des Würzefilms auf die Innenseite des kegelstumpfförmigen Wandteils unterstützt. Das gilt insbesondere bei einer Weiterbildung der Vorrichtung nach Anspruch 8.

Durch eine Ausgestaltung der Vorrichtung nach Anspruch 9 wird das Aufbringen der Würze in Form eines breiten aber dünnen Flüssigkeitsfilms begünstigt. Bei einer Ausbildung der Vorrichtung gemäß dem zweiten Alternativmerkmal wird der Flüssigkeitsfilm in Umfangsrichtung zusätzlich beschleunigt, was das Absinken des Würzefilms verzögert, und seine Verweildauer auf der Innenseite des kegelstumpfförmigen Wandteils verlängert und außerdem dafür sorgt, dass der Würzefilm ein turbulentes Strömungsverhalten aufweist, was das Abscheiden flüchtiger Umwandlungsprodukte verstärkt.
Durch eine Ausgestaltung der Vorrichtung nach Anspruch 10 wird der Aufbau des Gefäßes vereinfacht und seine Herstellung erleichtert, weil es insgesamt nur zwei Wandteile aufweist. Bei der Ausbildung gemäß dem ersten Alternativmerkmal wird die Würze über den unten gelegenen Wandteil zugeführt, wodurch die Ausbildung der Zuführleitung für die Würze vereinfacht wird. Bei der Ausbildung gemäß dem zweiten Alternativmerkmal wird die Würze über den oben gelegenen Wandteil in das Gefäß eingebracht, so dass die Innenseite des kegelstumpfförmigen Wandteils frei von Einbauten bleibt und die darauf aufgebrachten Würzebahnen ungestört sind.

Durch eine Ausgestaltung der Vorrichtung nach Anspruch 11 wird erreicht, dass im unteren Teil des Gefäßes während des Ausdampfbetriebes ein gewisser Würzepegel erhalten bleibt, so dass die in der Auslaufleitung eingeschaltete Förderpumpe nicht trocken laufen kann.

Durch eine Ausgestaltung der Vorrichtung nach Anspruch 12 kann neben dem Ausdampfvorgang zugleich auch ein in der Würze möglicherweise enthaltener Trub abgeschieden werden.

Mit einer Ausgestaltung der Vorrichtung nach Anspruch 13 wird eine besonders einfach gestaltete Trubabscheidevorrichtung geschaffen.

Durch eine Ausgestaltung der Vorrichtung nach Anspruch 14 kann bei Bedarf das in der Trubabscheidevorrichtung angeordnete Sieb rückgespült werden.

Durch eine Ausgestaltung der Vorrichtung nach Anspruch 15 kann der anfallende Trub nach Bedarf abgezogen werden.

Mit einer Ausgestaltung der Vorrichtung nach Anspruch 16 kann bei Bedarf das Sieb mittels der Spülflüssigkeit frei gespült werden.

Durch eine Ausgestaltung der Vorrichtung nach Anspruch 17 kann der durch den Ausdampfvorgang in der Würze entstehende Wärmeverlust ausgeglichen werden, so dass das Ausdampfen bei gleichbleibend guten Bedingungen von statten geht. Das Gleiche kann mit einer Ausgestaltung der Vorrichtung nach Anspruch 18 erreicht werden.

Im Folgenden wird die Erfindung anhand zweier in der Zeichnung dargestellter Ausführungsbeispiele näher erläutert. Es zeigen:
- Fig. 1: einen Aufriss der Würzeausdampfvorrichtung;
- Fig. 2: einen Schnitt der Vorrichtung gemäß der Schnittverlaufslinie A - A in Fig. 1;
- Fig. 3: einen vergrößert dargestellten Ausschnitt der Vorrichtung gemäß der Linie B - B in Fig. 2;
- Fig. 4: einen ausschnittweise und zum Teil schematisch dargestellten Schnitt durch eine abgewandelte Ausführungsform der Vorrichtung mit einer Trubabscheidevorrichtung.

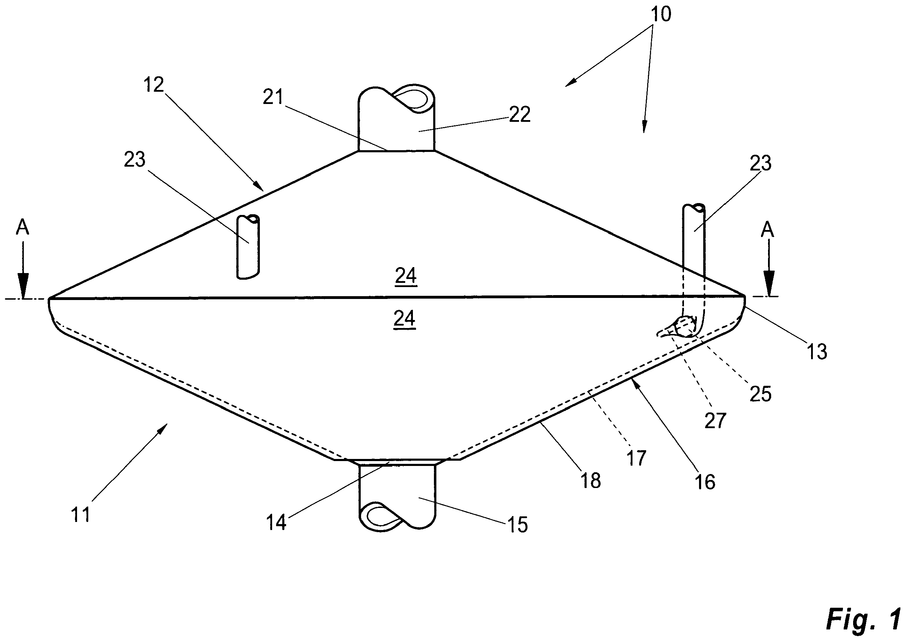

Fig. 1 zeigt einen Aufriss oder eine Außenansicht einer Würzeausdampfvorrichtung 10, die im Folgenden kurz als Vorrichtung 10 bezeichnet wird.

Die Vorrichtung 10 wird durch zwei Wandteile gebildet, und zwar durch den unteren Wandteil 11 und den oberen Wandteil 12, die fest und dicht miteinander verbunden sind, insbesondere miteinander verschweißt sind. Der unteren Wandteil 11 hat näherungsweise die Form eines Kegelstumpfes, der nach oben geöffnet ist. Sein oberster Randbereich 13 ist in Richtung auf den oberen Wandteil 12 hin gekrümmt.

Am unteren Ende des unteren Wandteils 11 ist eine Auslauföffnung 14 für die Würze angeordnet. Daran schließt eine Auslaufleitung 15 an, die die Würze zu weiteren Behandlungsstationen weiterleitet. In diese Auslaufleitung 15 ist in der Regel eine Förderpumpe für die Würze eingeschaltet, die in der Zeichnung nicht dargestellt ist.

Der Öffnungswinkel α der kegelstumpfförmigen Wandteils 11 kann von 120° bis 175° reichen. Zweckmäßigerweise ist er mindestens 150 ° oder größer, um die Verweildauer des Würzefilms auf der Innenseite des kegelstumpfförmigen Wandteils 11 zu verlängern.

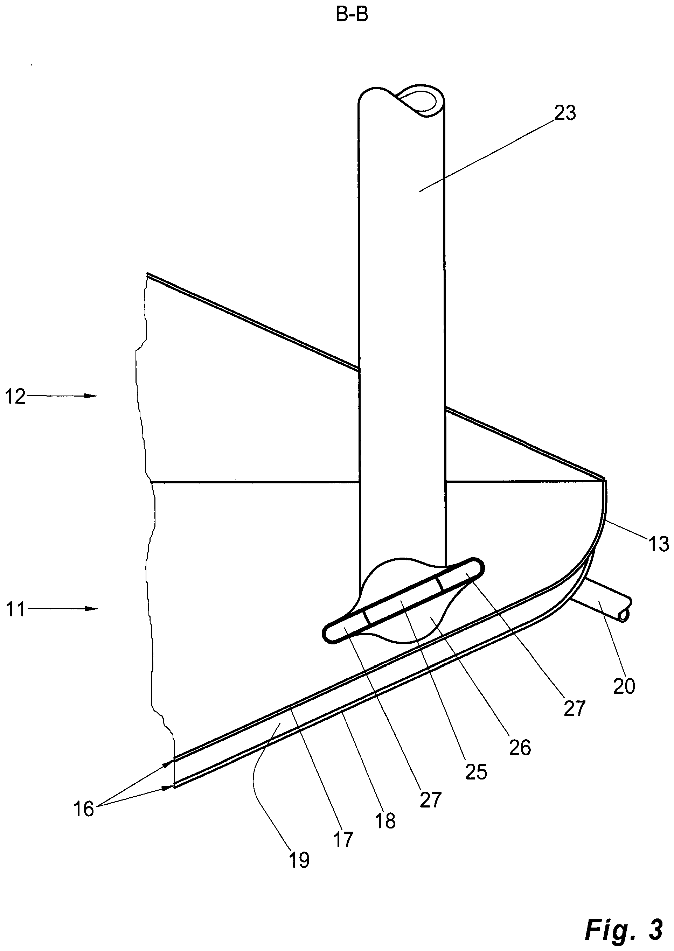

Der untere Wandteil 11 hat einen rein kegelstumpfförmigen Wandbereich 16. Dieser ist größtenteils nach "Temp-plate-Art" doppeltwandig ausgebildet, bei der seine Innenwand 17 und seine Außenwand 18 entlang der Ränder und im Innenbereich in einem bestimmten Anordnungsmuster punktweise miteinander verschweißt sind. Eine der Wände wird danach aufgebläht, so dass sie Ausbeulungen aufweist, die einen zusammenhängenden Zwischenraum 19 bilden, der von einem Heiz- oder Kühlmedium durchströmt werden kann, um Wärmeenergie an die Würze abzugeben bzw. von ihr abzuleiten. Beim Ausdampfen ist es zweckmäßig, der Würze Wärmeenergie zuzuführen, um den durch das Ausdampfen auftretenden Wärmeverlust auszugleichen. In Fig. 3 rechts ist eine der Anschlussleitungen 20 angedeutet, durch die das Heiz- oder Kühlmedium zugeführt bzw. abgeführt wird. Anstelle der Ausbildung des kegelstumpfförmigen Wandbereiches 16 nach "Temp-plate-Art" kann ihm das Heizoder Kühlmedium auch durch Segmentrohre zugeführt werden, die mit seiner Außenseite verschweißt sind.

Der obere Wandteil 12 dient als Deckel der Vorrichtung 10. Er ist ebenfalls kegelstumpfförmig ausgebildet, kann aber auch gewölbt sein. An seinem oberen Ende weist er eine Auslassöffnung 21 für den Dampf und für die mit dem Dampf austretenden flüchtigen Inhaltsstoffe der Würze auf. Daran schließt eine Auslassleitung 22 für den Dampf und die mitgeführten Inhaltsstoffe an. Dieser Dampf kann in einem Kondensator niedergeschlagen werden und dabei können die mitgeführten Inhaltsstoffe abgeschieden werden.

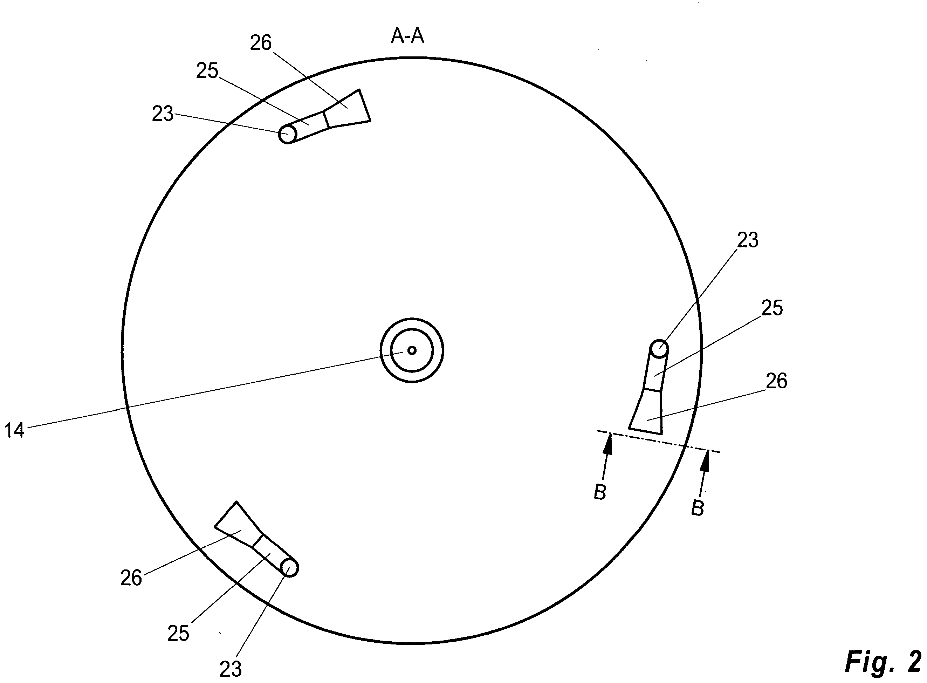

Am oberen Wandteil 12 sind Zuführleitungen 23 für die Würze angeordnet. In Fig. 1 und Fig. 2 sind drei dargestellt. Die tatsächliche Anzahl richtet sich nach der gewählten Größe der Vorrichtung 10, insbesondere nach deren Durchmesser, und nach dem angestrebten Würzedurchsatz. Die Zuführleitungen 23 sind in Umfangsrichtung gleichmäßig verteilt angeordnet. Zur besseren Übersicht ist die gemeinsame Versorgungsleitung der drei Zuführleitungen 23 nicht dargestellt.

Die drei Zuführleitungen 23 erstrecken sich durch je eine Ausnehmung im Wandteil 12 in den Innenraum 24 der Vorrichtung 10 hinein. Sie sind gegenüber dem Wandteil 12 abgedichtet, insbesondere mit ihm verschweißt. Kurz oberhalb der Innenseite des kegelstumpfförmigen Wandbereiches 16 sind die Zuführleitungen 23 in Umfangsrichtung des kegelstumpfförmigen Wandbereiches 16 abgebogen. Daran schließt eine gerade Beruhigungsstrecke 25 an, deren Länge mindest gleich dem dreifachen Durchmesser der Beruhigungsstrecke 25 ist, und daran schließt ein Übergangsteil 26 an, das am Ende eine Austrittsöffnung 27 für die Würze aufweist. Die lichte Querschnittsform des Übergangsteils 26 geht von der Kreisform am Ende der Beruhigungsstrecke 25 in die eines langen und engen Schlitzes über, der die Austrittsöffnung 27 bildet und der zumindest annähernd parallel zu der nächst gelegenen Mantellinie des kegelstumpfförmigen Wandteils 11 ausgerichtet ist. In Fig. 3 ist bei der Austrittsöffnung 27 der Schlitz weiter dargestellt als er in Wirklichkeit ist.

Die lichte Querschnittsfläche des Übergangsteils 26 zwischen dem Ende der Beruhigungsstrecke 25 und der Austrittsöffnung 27 kann gleichbleibend sein, zweckmäßigerweise jedoch verjüngt sie sich.

Der Endbereich der Zuführleitungen 23 ist so gestaltet, dass die Austrittsöffnung 27 einen Abstand von der Innenseite des kegelstumpfförmigen Wandbereiches 16 hat, der nur wenig größer als die Dicke des auf der Innenseite des kegelstumpfförmigen Wandbereiches 16 aufgebrachten Würzefilms ist.

Nicht dargestellt ist, dass im Bereich des unteren Endes des kegelstumpfförmigen unteren Wandteils 11 in einer vorgegebenen Höhe oberhalb der Auslauföffnung 14 für die Würze ein Sensor für den Würzestand im Gefäß 10 angeordnet ist. Er steht mit einem Steuergerät in Verbindung, das die Messsignale des Sensors für den Würzestand in Steuersignale für den Betrieb der Förderpumpe in der Zuführleitung 23 für die Würze umwandelt.

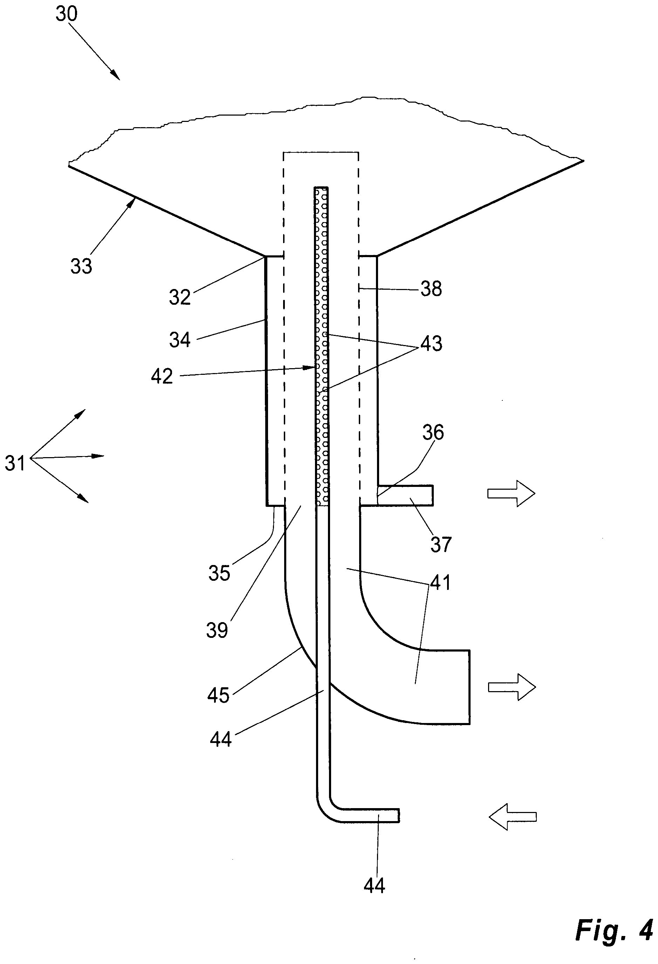

Bei der in Fig. 4 dargestellten abgewandelten Ausführungsform der Würzeausdampfvorrichtung 30 ist das untere Ende als Trubabscheidevorrichtung 31 ausgebildet. Die übrigen Baugruppen und Bauteile sind gleich oder zumindest ähnlich denjenigen des ersten Ausführungsbeispieles ausgebildet, so dass auf deren Beschreibung verwiesen werden kann.

Am unteren Rand 32 des kegelstumpfförmigen Wandteils 33 schließt ein zylindrisches Fallrohr 34 für den in der Würze noch vorhandenen oder neu entstandenen Trub an. Es hat eine vorgegebene Länge und ist unten in axialer Richtung durch einen Boden 35 abgeschlossen. Im Höhenbereich seines Bodens 35 weist das Fallrohr 34 eine Abflussöffnung 36 für den Trub auf. Sie ist an der Seite des Fallrohres 34 oder auch an seinem Boden angeordnet. Daran schließt eine Abflussleitung 37 für den Trub an.

In dem Fallrohr 34 ist ein zylindrisches Sieb 38 konzentrisch angeordnet, das in Fig. 4 nur durch eine gestrichelte Linie schematisch dargestellt ist. Seine Länge ist größer als die Länge des Fallrohres 34. Sein Außendurchmesser ist kleiner als die lichte Weite des Fallrohres 34. Es ist mit dem Boden 35 des Fallrohres 34 lösbar und dicht verbunden. Das Sieb 38 ist im Allgemeinen am oberen Ende offen.

Das untere Ende des Siebes 38, das mit dem Boden 35 des Fallrohres 34 verbunden ist, stellt bei der Würzeausdampfvorrichtung 30 die Auslauföffnung 39 für die Würze dar. Daran schließt eine Abflussleitung 41 für die Würze an.

Im Inneren des Siebes 38 ist ein Spülrohr 42 angeordnet, dessen Länge höchstens gleich der Länge des Siebes 38 ist, das eine Anzahl Austrittsöffnungen 43 für die Spülflüssigkeit aufweist und das an eine Zuführleitung 44 für die Spülflüssigkeit angeschlossen ist. Die Zuführleitung 44 für die Spülflüssigkeit ist durch die Wand 45 der Abflussleitung 41 für die Würze dicht hindurchgeführt. An die Zuführleitung 44 für die Spülflüssigkeit ist eine Förderpumpe für die Spülflüssigkeit angeschlossen, die in Fig. 4 nicht dargestellt ist.

Die folgenden Teile sind der besseren Übersicht wegen in Fig. 4 nicht dargestellt.

Am Fallrohr 34 ist wenigstens ein Sensor für den Stand des Trubes im Fallrohr 34 angeordnet. In der Abflussleitung 37 für den Trub ist ein Ventil und/oder eine Förderpumpe angeordnet, durch das bzw. die der Trubabfluss gesteuert werden kann, und es ist ein Steuergerät vorhanden, mittels dessen die Signale des Sensors für den Stand des Trubes in Steuersignale für die Betätigung des Ventils für die Steuerung des Trubabflusses bzw. für die Förderpumpe umgewandelt werden können.

Im Bereich des Siebes 38 ist wenigstens ein Sensor für den Ablagerungsgrad des Trubes am Sieb 38 angeordnet. Es ist ein Steuergerät vorhanden, mittels dessen die Signale des Sensors für den Ablagerungsgrad des Trubes am Sieb 38 in Steuersignale für die Betätigung der Förderpumpe für die Spülflüssigkeit umgewandelt werden können. Dadurch, dass die Austrittsöffnung 27 für die Würze im oberen Bereich des kegelstumpfförmigen Wandteils 33 angeordnet ist und tangential zur Innenseite des kegelstumpfförmigen Wandteils 33 ausgerichtet ist, erhält der Flüssigkeitsfilm auf der Innenseite des kegelstumpfförmigen Wandteils 33 eine gewisse Rotationsgeschwindigkeit, die bis zum Eintritt in das Fallrohr 34 erhalten bleibt. Dadurch wird die Hauptmenge des Trubanteils in den Ringbereich zwischen dem Fallrohr 34 und dem Sieb 38 eintreten. Der noch in der Schwebe befindliche Trubanteil wird von dem Sieb 38 zurückgehalten und mit dem Haupttrub-anteil in die Abflussleitung 37 für den Trub gefördert.
In dem Falle, dass ein Teil des Trubes sich an der Außenseite des Siebes 38 ansetzt, wird von dem betreffenden Sensor eine Rückspülung veranlasst und über die Zuführleitung 44 die Spülflüssigkeit in das Spülrohr 44 gefördert, wo sie durch die Austrittsöffnungen 43 austritt und durch das Sieb 38 hindurch den anhaftenden Trub wegspült. Um dabei einen Kurzschlussstrom der Spülflüssigkeit zur Abflussleitung 41 hin zu verhindern, wird während der Rückspülung die Abflussleitung 41 abgesperrt.

### Bezugszeichenliste

- 10: Würzeausdampfvorrichtung
- 11: unterer Wandteil
- 12: oberer Wandteil
- 13: oberster Wandbereich
- 14: Auslauföffnung
- 15: Auslaufleitung
- 16: Wandbereich
- 17: Innenwand
- 18: Außenwand
- 19: Zwischenraum
- 20: Anschlussleitung

- 21: Auslassöffnung
- 22: Auslassleitung
- 23: Zuführleitung
- 24: Innenraum
- 25: Beruhigungsstrecke
- 26: Übergangsteil
- 27: Austrittsöffnung

- 30: Würzeausdampfvorrichtung
- 31: Trubabscheidevorichtung
- 32: unterer Rand
- 33: Wandteil
- 34: Fallrohr
- 35': Boden
- 36: Abflussöffnung
- 37: Abflussleitung
- 38: Sieb
- 39: Auslauföffnung

- 41: Abflussleitung
- 42: Spülrohr
- 43: Austrittsöffnungen
- 44: Zuführleitung
- 45: Wand

## Patentansprüche

1. Würzeausdampfvorrichtung mit den Merkmalen:
- sie ist ein Gefäß für die Würze, das durch mehrere Wandteile (11; 12) gebildet wird,
- an einem oberen Wandteil (12) ist eine Zuführleitung (23) für die Würze angeordnet, die in mindestens einer Austrittsöffnung (27) mündet,
- die Zuführleitung (23) für die Würze ist mit einer Förderpumpe verbunden,
- an einem unteren Wandteil (11) ist eine Auslauföffnung (14) für die Würze vorhanden, an die eine Auslaufleitung (15) angeschlossen ist,
- am oberen Wandteil (12) ist eine Auslassöffnung (21) für den aus der Würze abgeschiedenen Dampf vorhanden, an die eine Auslassleitung (22) für den Dampf angeschlossen ist,
- der untere Wandteil (11) mit der Auslauföffnung (14) für die Würze ist als hohler Kegelstumpf ausgebildet, der sich nach oben öffnet und dessen unteres Ende die Auslauföffnung (14) für die Würze bildet,
- die Austrittsöffnung (27) am Ende der Zuführleitung (23) für die Würze ist im oberen Bereich des kegelstumpfförmigen, unteren Wandteils (11) angeordnet und in Umfangsrichtung zumindest annähernd tangential zur Innenseite des kegelstumpfförmigen, unteren Wandteils (11) ausgerichtet.

2. Würzeausdampfvorrichtung nach Anspruch 1, mit dem Merkmal:
- der Öffnungswinkel α des kegelstumpfförmigen, unteren Wandteils (11) reicht von 120° bis 175°.

3. Würzeausdampfvorrichtung nach Anspruch 2, mit dem Merkmal:
- der Öffnungswinkel α des kegelstumpfförmigen, unteren Wandteils (11) ist mindestens gleich 150° oder größer.

4. Würzeausdampfvorrichtung nach einem der Ansprüche 1 bis 3, mit den Merkmalen:
- es sind zwei oder mehr Austrittsöffnungen (27) für die Würze vorhanden.

5. Würzeausdampfvorrichtung nach Anspruch 4, mit dem Merkmal:
- die Austrittsöffnungen (27) sind gleichmäßig in Umfangsrichtung verteilt angeordnet.

6. Würzeausdampfvorrichtung nach einem der Ansprüche 1 bis 5, mit dem Merkmal:
- jede Austrittsöffnung (27) für die Würze ist in einem vorgegebenen Abstand von der Innenseite des kegelstumpfförmigen, unteren Wandteils (11) angeordnet.

7. Würzeausdampfvorrichtung nach einem der Ansprüche 1 bis 6, mit dem Merkmal:
- die Zuführleitung (23) für die Würze weist vor der Austrittsöffnung (27) einen zumindest annähernd gerade verlaufenden Längenabschnitt (25) auf.

8. Würzeausdampfvorrichtung nach Anspruch 7, mit dem Merkmal:
- der gerade verlaufenden Längenabschnitt (25) hat eine Länge, die mindestens gleich dem Dreifachen der lichten Weite der Zuführleitung (23) ist.

9. Würzeausdampfvorrichtung nach einem der Ansprüche 1 bis 8, mit den Merkmalen:
- die Austrittsöffnung (27) am Ende der Zuführleitung (23) hat die Form eines langen und engen Schlitzes, der zumindest annähernd parallel zu der nächst gelegenen Mantellinie des kegelstumpfförmigen, unteren Wandteils (11) ausgerichtet ist,
- zwischen der Zuführleitung (23) und der Austrittsöffnung (27) ist ein Übergangsteil (26) vorhanden,
- die lichte Querschnittsfläche des Übergangsteils (26) in Richtung zur Austrittsöffnung (27) hin
- - ist entweder gleichbleibend groß
- - oder verringert sich stetig.

10. Würzeausdampfvorrichtung nach einem der Ansprüche 1 bis 9, mit den Merkmalen:
- von den Wandteilen des Gefäßes bilden
- - entweder der untere Wandteil (11) mit der Auslauföffnung (14) für die Würze und der obere Wandteil (12) mit der Zuführleitung (23) für die Würze einen gemeinsames Wandteil
- - oder der obere Wandteil (12) mit der Auslassöffnung (21) für den Dampf und der obere Wandteil (12) mit der Zuführleitung (23) für die Würze einen
gemeinsames Wandteil.

11. Würzeausdampfvorrichtung nach einem der Ansprüche 1 bis 10, mit den Merkmalen:
- im Bereich des unteren Endes des kegelstumpfförmigen, unteren Wandteils (11) ist ein Sensor für den Würzestand im Gefäß angeordnet,
- es ist ein Steuergerät vorhanden, das die Messsignale des Sensors für den Würzestand in Steuersignale für den Betrieb der Förderpumpe in der Zuführleitung (23) für die Würze umwandelt.

12. Würzeausdampfvorrichtung nach einem der Ansprüche 1 bis 11, mit dem Merkmal:
- die Auslauföffnung (14) für die Würze ist als Trubabscheidevorrichtung (30) ausgebildet.

13. Würzeausdampfvorrichtung nach Anspruch 12, mit den Merkmalen:
- am unteren Rand (32) des kegelstumpfförmigen Wandteils (34) schließt ein zylindrisches Fallrohr (34) für den Trub an,
- - das eine vorgegebene Länge hat,
- - das unten in axialer Richtung durch einen Boden (35) abgeschlossen ist und
- - das im Bereich seines unteren Endes (35) eine Abflussöffnung (37) mit einer daran anschließenden Abflussleitung (38) aufweist,
- in dem Fallrohr (34) ist ein zylindrisches Sieb (38) konzentrisch angeordnet,
- - dessen Länge größer als die Länge des Fallrohres (34) ist,
- - dessen Außendurchmesser kleiner als die lichte Weite des Fallrohres (34) ist und
- - das mit dem Boden (35) des Fallrohres (34) lösbar und dicht verbunden ist,
- in der Fluchtlinie des Siebes (38) ist im Boden (35) des Fallrohres (34) die Auslauföffnung (39) für die Würze angeordnet, an die eine Abflussleitung (41) für die Würze anschließt.

14. Würzeausdampfvorrichtung nach Anspruch 13, mit den Merkmalen:
- im Inneren des Siebes (38) ist ein Spülrohr (42) angeordnet,
- - dessen Länge höchstens gleich der Länge des Siebes (38) ist,
- - das eine Anzahl Austrittsöffnungen (43) für die Spülflüssigkeit aufweiset und
- - an das eine Zuführleitung (44) für die Spülflüssigkeit angeschlossen ist,
- die Zuführleitung (44) für die Spülflüssigkeit ist durch die Wand (45) der Abflussleitung (41) für die Würze hindurchgeführt,
- an die Zuführleitung (44) für die Spülflüssigkeit ist eine Förderpumpe für die Spülflüssigkeit angeschlossen.

15. Würzeausdampfvorrichtung nach Anspruch 13 oder 14, mit den Merkmalen:
- am Fallrohr (34) ist wenigstens ein Sensor für den Stand des Trubes im Fallrohr (34) angeordnet,
- in der Abflussleitung (37) für den Trub ist ein Ventil angeordnet, durch das der Trubabfluss steuerbar ist und
- es ist ein Steuergerät vorhanden, mittels dessen die Signale des Sensors für den Stand des Trubes in Steuersignale für die Betätigung des Ventils für die Steuerung des Trubabflusses umgewandelt werden.

16. Würzeausdampfvorrichtung nach einem der Ansprüche 13 bis 15, mit den Merkmalen:
- im Bereich des Siebes (38) ist wenigstens ein Sensor für den Ablagerungsgrad des Trubes am Sieb (38) angeordnet,
- es ist ein Steuergerät vorhanden, mittels dessen die Signale des Sensors für den Ablagerungsgrad des Trubes am Sieb (38) in Steuersignale für die Betätigung der Förderpumpe für die Spülflüssigkeit umgewandelt werden.

17. Würzeausdampfvorrichtung nach einem der Ansprüche 1 bis 16, mit den Merkmalen:
- der kegelstumpfförmige, untere Wandteil (11) ist doppelwandig nach "Template-Art" ausgebildet, bei dem der Hohlraum (19) zwischen den beiden Wänden (17; 18) an eine Quelle für ein Heizmedium oder ein Kühlmedium anschließbar ist.

18. Würzeausdampfvorrichtung nach einem der Ansprüche 1 bis 16, mit den Merkmalen:
- an der Außenseite des kegelstumpfförmigen, unteren Wandteils (11) sind Segmentrohre angeordnet, die mit dem unteren Wandteil (11) verschweißt sind und an die eine Quelle für ein Heizmedium oder ein Kühlmedium anschließbar ist.

## Claims

1. Wort evaporation device with the features:
- it is a vessel for the wort which is formed by a plurality of wall parts (11, 12),
- a supply line (23) for the wort is arranged on an upper part of the wall (12) and ends in at least one delivery port (27),
- the supply line (23) for the wort is connected to a supply pump,
- an outlet port (14), onto which a discharge line (15) for the wort is attached, exists on a lower part of the wall (11),
- on the upper wall part (12) is an outlet port (21) for the vapour that separates from the wort, and an outlet line (22) for the vapour is attached to said outlet port (21),
- the lower wall part (11) with the outlet port (14) for the wort is designed as a hollow truncated cone that is open at the top and whose lower end forms the outlet port (14) for the wort,
- the delivery port (27) on the end of the supply line (23) for the wort is arranged in the upper area of the truncated cone-shaped, lower wall part (11) and is oriented in the circumferential direction at least approximately tangentially to the inner side of the truncated conical lower wall part (11).

2. Wort evaporation device according to claim 1, with the feature:
- the opening angle α of the truncated cone-shaped, lower wall part (11) reaches from 120° to 175°.

3. Wort evaporation device according to claim 2, with the feature:
- the opening angle α of the truncated cone-shaped, lower wall part (11) is at least equal to or greater than 150°.

4. Wort evaporation device according to one of claims 1 to 3, with the features:
- there exist two or more delivery ports (27) for the wort.

5. Wort evaporation device according to claim 4, with the feature:
- the delivery ports (27) are evenly distributed in the circumferential direction.

6. Wort evaporation device according to one of claims 1 to 5, with the feature:
- each delivery port (27) for the wort is arranged at a pre-defined distance from the inner side of the truncated cone-shaped, lower wall (11).

7. Wort evaporation device according to one of claims 1 to 6, with the feature:
- the supply line (23) for the wort possesses an at least approximately straight lengthwise running section (25) upstream of the delivery port (27).

8. Wort evaporation device according to claim 7, with the feature:
- the length of the straight lengthwise running section (25) is at least equal to three times the inner diameter of the supply line (23).

9. Wort evaporation device according to one of claims 1 to 8, with the features:
- the delivery port (27) at the end of the supply line (23) has the shape of a long and narrow slit that runs at least approximately parallel to the nearest surface line of the truncated cone-shaped, lower wall part (11),
- a transition piece (26) exists between the supply line (23) and the delivery port (27),
- the inner cross sectional area of the transition piece (26) towards the delivery port (27)
- is either constant in size
- or continuously decreases.

10. Wort evaporation device according to one of claims 1 to 9, with the features:
- from the wall parts of the vessel
- either the lower wall part (11) with the outlet port (14) for the wort and the upper wall part (12) with the supply line (23) for the wort form a common wall part
- or the upper wall part (12) with the outlet port (21) for the vapour and the upper wall part (12) with the supply line (23) for the wort form a common wall part.

11. Wort evaporation device according to one of claims 1 to 10, with the features:
- a sensor for the wort level in the vessel is arranged in the region of the lower end of the truncated cone-shaped lower wall part (11),
- a control unit is present which converts the measurement signals from the sensor for the wort level into control signals for operating the supply pump in the supply line (23) for the wort.

12. Wort evaporation device according to one of claims 1 to 11, with the feature:
- the outlet port (14) for the wort is designed as a trub separation device (30).

13. Wort evaporation device according to claim 12, with the features:
- a cylindrical down pipe (34) for the trub is connected on the lower rim (32) of the truncated cone-shaped wall part (34),
- - the down pipe has a pre-defined length,
- - the down pipe below in the axial direction is closed by a base(35)and
- - the down pipe, in the region of its lower end (35), possesses a discharge port (37) to which is connected a discharge line (38),
- -a cylindrical sieve (38) is arranged concentrically in the down pipe (34),
- - the length of the sieve is greater than the length of the down pipe (34),
- - the external diameter of the sieve is less than the internal width of the down pipe (34) and
-- the sieve is detachably and tightly connected to the base (35) of the down pipe (34),
- the outlet port (39) for the wort is arranged in the alignment of the sieve (38) in the base (35) of the drop pipe (34) and is connected to a discharge line (41) for the wort.

14. Wort evaporation device according to claim 13, with the features:
- in the interior of the sieve (38) is arranged a wash pipe (42),
- - whose length is at most equal to the length of the sieve (38),
- said wash pipe possesses a number of delivery ports (43) for the rinsing liquid and
- - on which a supply line (44) for the rinsing liquid is connected,
- the supply line (44) for the rinsing liquid is guided through the wall (45) of the discharge line (41) for the wort,
- a supply pump for the rinsing liquid is connected to the supply line (44) for the rinsing liquid.

15. Wort evaporation device according to claim 13 or 14, with the features:
- at least one sensor for the trub level in the down pipe is arranged on the down pipe (34),
- a control valve to control the discharge of trub is arranged in the discharge line (37) for the trub and
- a control unit is present by means of which the signals from the sensor for the level of the trub are converted into control signals for actuating the valve so as to control the trub discharge.

16. Wort evaporation device according to one of claims 13 to 15, with the features:
- at least one sensor for the degree of deposition of the trub on the sieve (38) is arranged in the region of the sieve (38),
- a control unit is present by means of which the signals from the sensor for the degree of deposition of the trub on the sieve (38) are converted into control signals for actuating the supply pump for the rinsing liquid.

17. Wort evaporation device according to one of claims 1 to 16, with the features:
- the truncated cone-shaped lower wall part (11) is of a double wall "Template-Art" design, in which the cavity (19) between both walls (17, 18) is connectable to a source of a heating medium or a cooling medium.

18. Wort evaporation device according to one of claims 1 to 16, with the features:
- on the external side of the truncated cone-shaped lower wall part (11) are arranged segment pipes that are welded to the lower wall part (11), and a source for a heating medium or a cooling medium is connectable to said pipes.

## Revendications

1. Dispositif d'évaporation de moût avec les caractéristiques suivantes :
- il s'agit d'une cuve pour le moût, laquelle est formée par plusieurs parties de paroi (11 ; 12),
- au niveau d'une partie de paroi supérieure (12) est disposé un conduit d'alimentation (23) pour le moût qui débouche dans au moins un orifice d'évacuation (27),
- le conduit d'alimentation (23) pour le moût est relié à une pompe d'alimentation,
- au niveau d'une partie de paroi inférieure (11) il y a un orifice d'écoulement (14) pour le moût, auquel un conduit d'écoulement (15) est raccordé,
- au niveau de la partie de paroi supérieure (12) il y a un orifice d'échappement (21) pour la vapeur séparée du moût, auquel un conduit d'échappement (22) est raccordé pour la vapeur,
- la partie de paroi inférieure (11) avec l'orifice d'écoulement (14) pour le moût est réalisée en tant que cône tronqué creux s'ouvrant vers le haut et dont l'extrémité inférieure forme l'orifice d'écoulement (14) pour le moût,
- l'orifice d'évacuation (27) à l'extrémité du conduit d'alimentation (23) pour le moût est disposé dans la zone supérieure de la partie de paroi inférieure (11) en forme de cône tronqué et est orienté en direction périphérique au moins approximativement tangentiellement au côté interne de la partie de paroi inférieure (11) en forme de cône tronqué.

2. Dispositif d'évaporation de moût selon la revendication 1, avec la caractéristique suivants :
- l'angle d'ouverture α de la partie de paroi inférieure (11) en forme de cône tronqué va de 120° à 175°.

3. Dispositif d'évaporation de moût selon la revendication 2, avec la caractéristique suivants :
- l'angle d'ouverture α de la partie de paroi inférieure (11) en forme de cône tronqué est au moins supérieur ou égal à 150°.

4. Dispositif d'évaporation de moût selon l'une des revendications 1 à 3, avec les caractéristiques suivantes :
- il y a deux orifices d'évacuation (27) ou plus pour le moût.

5. Dispositif d'évaporation de moût selon la revendication 4, avec la caractéristique suivants :
- les orifices d'évacuation (27) sont disposés de manière régulièrement répartie en direction périphérique.

6. Dispositif d'évaporation de moût selon l'une des revendications 1 à 5, avec la caractéristique suivants :
- chaque orifice d'évacuation (27) pour le moût est disposé à une distance prédéterminée par rapport au côté interne de la partie de paroi inférieure (11) en forme de cône tronqué.

7. Dispositif d'évaporation de moût selon l'une des revendications 1 à 6, avec la caractéristique suivants :
- le conduit d'alimentation (23) pour le moût présente, devant l'orifice d'évacuation (27), un tronçon longitudinal (25) s'étendant au moins approximativement de façon rectiligne.

8. Dispositif d'évaporation de moût selon la revendication 7, avec la caractéristique suivants :
- le tronçon longitudinal (25) s'étendant de façon rectiligne a une longueur au moins égale au triple du diamètre intérieur du conduit d'alimentation (23).

9. Dispositif d'évaporation de moût selon l'une des revendications 1 à 8, avec les caractéristiques suivantes :
- l'orifice d'évacuation (27) à l'extrémité du conduit d'alimentation (23) a la forme d'une fente longue et étroite, laquelle est orientée au moins approximativement parallèlement à la génératrice la plus proche de la partie de paroi inférieure (11) en forme de cône tronqué,
- entre le conduit d'alimentation (23) et l'orifice d'évacuation (27) il y a une partie de transition (26),
- l'aire de section libre de la partie de transition (26) en direction de l'orifice d'évacuation (27) est
-- d'une taille restant constante,
-- ou bien diminue de façon constante.

10. Dispositif d'évaporation de moût selon l'une des revendications 1 à 9, avec les caractéristiques suivantes :
- parmi les parties de paroi de la cuve,
-- la partie de paroi inférieure (11) avec l'orifice d'écoulement (14) pour le moût et la partie de paroi supérieure (12) avec le conduit d'alimentation (23) pour le moût forment une partie de paroi commune,
-- ou bien la partie de paroi supérieure (12) avec l'orifice d'échappement (21) pour la vapeur et la partie de paroi supérieure (12) avec le conduit d'alimentation (23) pour le moût forment une partie de paroi commune.

11. Dispositif d'évaporation de moût selon l'une des revendications 1 à 10, avec les caractéristiques suivantes :
- dans la zone de l'extrémité inférieure de la partie de paroi inférieure (11) en forme de cône tronqué est disposé un capteur pour le niveau de moût dans la cuve,
- il y a un dispositif de commande convertissant les signaux de mesure du capteur pour le niveau de moût en signaux de commande pour l'exploitation de la pompe d'alimentation dans le conduit d'alimentation (23) pour le moût.

12. Dispositif d'évaporation de moût selon l'une des revendications 1 à 11, avec la caractéristique suivants :
- l'orifice d'écoulement (14) pour le moût est réalisé en tant que dispositif séparateur de dépôt (30).

13. Dispositif d'évaporation de moût selon la revendication 12, avec les caractéristiques suivantes :
- au niveau du bord inférieur (32) de la partie de paroi (34) en forme de cône tronqué, un tube de descente (34) cylindrique pour le dépôt est en jonction,
-- lequel a une longueur prédéterminée,
-- lequel est fermé en bas en direction axiale par un fond (35) et
-- lequel présente dans la zone de son extrémité inférieure (35) un orifice de déversement (37) avec un conduit de déversement (38) en jonction avec celui-ci,
- dans le tube de descente (34), un tamis cylindrique (38) est disposé concentriquement,
-- dont la longueur est supérieure à la longueur du tube de descente (34),
-- dont le diamètre extérieur est inférieur au diamètre intérieur du tube de descente (34) et
-- lequel est relié de manière étanche et amovible avec le fond (35) du tube de descente (34),
- dans la ligne de fuite du tamis (38), dans le fond (35) du tube de descente (34), est disposé l'orifice d'écoulement (39) pour le moût avec lequel un conduit de déversement (41) pour le moût est en jonction.

14. Dispositif d'évaporation de moût selon la revendication 13, avec les caractéristiques suivantes :
- à l'intérieur du tamis (38) est disposé un tuyau de chasse (42),
-- dont la longueur est tout au plus égale à la longueur du tamis (38),
-- lequel présente un certain nombre d'orifices d'évacuation (43) pour le liquide de rinçage et
-- auquel est raccordé un conduit d'alimentation (44) pour le liquide de rinçage,
- le conduit d'alimentation (44) pour le liquide de rinçage est mené à travers la paroi (45) du conduit de déversement (41) pour le moût,
- une pompe d'alimentation pour le liquide de rinçage est raccordée au conduit d'alimentation (44) pour le liquide de rinçage.

15. Dispositif d'évaporation de moût selon la revendication 13 ou 14, avec les caractéristiques suivantes :
- au niveau du tube de descente (34) est disposé au moins un capteur pour le niveau du dépôt dans le tube de descente (34),
- dans le conduit déversement (37) pour le dépôt est disposée une vanne grâce à laquelle le déversement du dépôt peut être commandé, et
- il y a un dispositif de commande au moyen duquel les signaux du capteur pour le niveau du dépôt sont convertis en signaux de commande pour l'actionnement de la vanne pour la commande du déversement du dépôt.

16. Dispositif d'évaporation de moût selon l'une des revendications 13 à 15, avec les caractéristiques suivantes :
- dans la zone du tamis (38) est disposé au moins un capteur pour le degré d'accumulation du dépôt sur le tamis (38),
- il y a un appareil de commande au moyen duquel les signaux du capteur pour le degré d'accumulation du dépôt sur le tamis (38) sont convertis en signaux de commande pour l'actionnement de la pompe d'alimentation pour le liquide de rinçage.

17. Dispositif d'évaporation de moût selon l'une des revendications 1 à 16, avec les caractéristiques suivantes :
- la partie de paroi inférieure (11) en forme de cône tronqué est réalisée à paroi double du « genre template » où l'espace creux (19) entre les deux parois (17 ; 18) peut être raccordé à une source pour un milieu chauffant ou un milieu de refroidissement.

18. Dispositif d'évaporation de moût selon l'une des revendications 1 à 16, avec les caractéristiques suivantes :
- au niveau du côté externe de la partie de paroi inférieure (11) en forme de cône tronqué sont disposés des tubes formant segment, lesquels sont soudés avec la partie de paroi inférieure (11) et auxquels il est possible de raccorder une source pour un milieu chauffant ou un milieu de refroidissement.
